# EUROPÄISCHE PATENTANMELDUNG

(11) **EP 3 696 196 A1**
(43) Veröffentlichungstag der Anmeldung: **19.08.2020**
(21) Anmeldenummer: 19157692.5
(22) Anmeldetag: 18.02.2019
(51) Int. Cl.: C08B 3/20, C08H 8/00, C08L 1/12

(54) **ACETYLIERUNG VON NATURFASERN UNTER ERHALT DER FASERSTRUKTUR**

(71) Anmelder: Cerdia International GmbH, 4052 Basel (CH)
(72) Erfinder: STEIN, Armin, 79341 Kenzingen (DE); LUBKOLL, Jana, 79110 Freiburg (DE)
(74) Vertreter: Trinks, Ole

(57) **Zusammenfassung**

Beschrieben wird ein Verfahren zur Acetylierung von lignozellulosehaltigen Fasermaterialien sowie nach diesem Verfahren hergestellte acetylierte lignozellulosehaltige Fasermaterialien und deren Verwendung.

## Beschreibung

Die vorliegende Erfindung betrifft ein Verfahren zur Acetylierung von lignozellulosehaltigen Fasermaterialien, ein nach diesem Verfahren hergestelltes acetyliertes lignozellulosehaltiges Fasermaterial sowie die Verwendung eines solchen Fasermaterials als Bestandteil von Verbundmaterialien, Baumaterialien und Isolationsmaterialien, sowie als Absorptionsmaterialien für Öl.

Lignozellulosehaltige Fasermaterialien, insbesondere in Form von Naturfasern, sind als Bestandteil von Verbundmaterialien, als Bestandteil von Konstruktionsmaterialien sowie als Bestandteil von Isolationsmaterialien von großem Interesse. Es handelt sich bei diesen Fasermaterialien um nachwachsende Rohstoffe, die aus land- und forstwirtschaftlicher Produktion stammen und deren Produktion CO₂-neutral ist. In vielen Bereichen können diese Produkte Rohstoffprodukte, die aus fossilen Kohlenstoffträgern gewonnen werden, wie beispielsweise Kunststoffe ersetzen und somit zu einer Reduktion des Verbrauchs von fossilen Rohstoffen und zu einer Verbesserung der CO₂-Bilanz beitragen.

Während diese lignozellulosehaltigen Materialien in den genannten Bereichen viele Vorteile aufweisen, besteht ein Nachteil der Materialien in ihrer Hydrophilie, was dazu führt, dass die unter Verwendung von solchen Fasern hergestellten Materialien Wasser einlagern und bei Veränderung der Umgebungsbedingung auch wieder abgeben können. Dies führt zu einer gewissen Quellung bzw. Schwindung der Materialien, was mit Nachteilen wie Rissbildung, Verformung und Ähnlichem verbunden ist. Bei Einsatz der Materialien als Isoliermaterialien kommt als zusätzlicher Nachteil hinzu, dass sich durch die Wassereinlagerung die Isolationseigenschaften stark verschlechtern können.

Ein weiterer Nachteil der hydrophilen Eigenschaften von lignozellulosehaltigen Fasermaterialien ist darin zu sehen, dass eine unzureichende Kompatibilität mit vielen Oberflächenbehandlungen festzustellen ist. So erschwert der hydrophile Charakter der Fasermaterialien die Verklebbarkeit und Lackierbarkeit der Materialien.

Zusätzlich macht der hydrophile Charakter der Fasermaterialien diese mikrobiologisch instabil. Bei mikrobiologischem Befall kommt es zum Abbau und/oder zu Verfärbung der Materialien und zu entsprechendem Verlust der dimensionalen Stabilität der Materialien. Darüber hinaus können durch den Befall insbesondere mit Schimmelpilzen auch für den Menschen schädliche Folgen auftreten, was insbesondere bei der Verwendung als Baumaterialien ins Gewicht fällt. Um einem solchen mikrobiellen Befall entgegenzuwirken, werden bei solchen Materialien daher oft Biozide und Fungizide eingesetzt, was allerdings kostenaufwändig ist und dem biologischen Charakter der Materialien entgegensteht.

Um diese Nachteil zu vermeiden ist es im Stand der Technik bekannt, lignozellulosehaltige Fasermaterialien durch Acetylierung zum hydrophobieren, wodurch sich auch die thermische Stabilität der Faser verbessern lässt. Dabei sind bislang im Wesentlichen zwei Verfahren bekannt.

Bei der einen Verfahrensvariante erfolgt die Acetylierung der lignozellulosehaltigen Fasermaterialien unter Einsatz von Acetylierungsmaterialien wie Essigsäureanhydrid, Keten oder Isopropenylacetat bei hohem Druck und hohen Temperaturen über einen langen Zeitraum. Bei diesen Reaktionsbedingungen lässt sich eine hinreichende Acetylierung der Fasermaterialien erreichen. Nachteilig an dieser Verfahrensvariante ist jedoch, dass es aufgrund der starken Nebenreaktionen zu einer deutlichen Verfärbung der lignozellulosehaltigen Fasermaterialien kommt. Darüber hinaus führen die Reaktionsbedingungen auch zur Bildung von Nebenprodukten wie beispielsweise Furfurylaldehyd, die eine Geruchsbelästigung darstellen und darüber hinaus auch toxikologisch nicht unbedenklich sind.

Bei der zweiten Verfahrensvariante erfolgt die Acetylierung durch Acetylierungsmittel unter milderen Bedingungen, wobei Katalysatoren eingesetzt werden. Diese Verfahrensvariante hat jedoch den Nachteil, dass es sehr schwer ist, den Katalysator vollständig von der acetylierten Faser zu entfernen. Rückstände des Katalysators auf der acetylierten Faser führen jedoch zu einer Destabilisierung des Produktes.

Der vorliegenden Erfindung lag daher die Aufgabe zu Grunde, ein Verfahren zur Acetylierung von lignozellulosehaltigen Fasern bereitzustellen, das die oben geschilderten Nachteile überwindet. Insbesondere war es die Aufgabe der vorliegenden Erfindung, ein Verfahren zur Acetylierung von lignocellulosehaltigen Fasern, insbesondere in Form von Naturfasern bereitzustellen, bei dem eine stabile acetylierte Faser erhalten werden kann, ohne dass es zur Verfärbung und/oder zur Bildung von geruchsbelästigenden und/oder toxikologisch bedenklichen Nebenprodukten kommt und bei dem die acetylierten Fasern über lange Zeit stabil sind.

Die erfindungsgemäße Aufgabe wird gelöst durch ein Verfahren zur Acetylierung von lignozellulosehaltigen Fasermaterialien, umfassend die Schritte:
i) Behandeln des lignozellulosehaltigen Fasermaterials mit Essigsäureanhydrid in Abwesenheit eines Katalysators unter Bedingungen eines Drucks von nicht mehr als 0,5 bar über Normaldruck (101325 Pa) und einer Temperatur von ≤ 200°C,
ii) Abtrennen des acetylierten lignozellulosehaltigen Fasermaterials von dem überschüssigen Essigsäureanhydrid, und
iii) destillatives Abtrennen der bei der Acetylierung generierten Essigsäure.

Die Erfinder haben überraschend gefunden, dass sich durch die erfindungsgemäßen Verfahrensschritten, und insbesondere die Behandlung des lignozellulosehaltigen Fasermaterials mit Essigsäureanhydrid in Abwesenheit eines Katalysators unter milden Bedingungen ohne den Einsatz eines Katalysators ein in günstigem Umfang acetyliertes Produkt herstellen lässt, dass nicht nennenswert verfärbt ist und bei dessen Herstellung die Bildung von geruchsbelästigenden bzw. toxikologisch bedenklichen Nebenprodukten weitestgehend vollständig ausgeschlossen wird. Durch den Verzicht auf den Katalysator entstehen gleichzeitig keine Probleme mit der Langzeitstabilität der Faser.

Wie vorstehend angeführt wird die Acetylierung im Kontext der vorliegenden Erfindung bei Bedingungen nicht signifikant erhöhten Drucks, d.h. insbesondere einem Druck von nicht mehr 0,5 bar über Normaldruck (101325 Pa), und einer Temperatur von ≤ 200°C, vorzugsweise ≤ 180°C und besonders bevorzugt ≤ 160°C bezeichnet. Durch diese Temperaturvorgaben lässt sich die Entstehung von Nebenprodukten wie Furfurylaldehyd weitestgehend vermeiden. Die Temperatur sollte andererseits hoch genug sein um eine möglichst schnelle Umsetzung des lignocellulosehaltigen Fasermaterials zu gewährleisten. Zweckmäßig sollte die Temperatur daher mindestens 90°C, bevorzugt mindestens 100°C, weiter bevorzugt mindestens 120°C und besonders bevorzugt mindestens 130°C betragen. Meist bevorzugt erfolgt die Umsetzung bei Normaldruck bei etwa 140°C, was der Siedetemperatur des Essigsäureanhydrids entspricht. Die Acetylierung wird im Kontext der vorliegenden Erfindung zweckmäßig so durchgeführt, dass die Faserstruktur unter den Reaktionsbedingungen erhalten bleibt, so dass die Fasern im Rahmen der Reaktion nicht z.B. nicht gelöst und danach durch Zugabe eines Fällungsmittels regeneriert werden.

Ein Katalysator ist im Rahmen der Erfindung eine Verbindung, die an der Reaktion zwischen lignocellulosehaltigen Fasermaterial und Essigsäureanhydrid partizipiert, indem die Energiebarriere für die Reaktion abgesenkt wird. Für Acetylierungsreaktionen, insbesondere von Lignocellulose gebräuchliche Katalysatoren sind beispielweise Alkalimetallacetate wie Natrium- oder Kaliumacetat oder Stickstoffhaltige heterocyclische Verbindungen wie Pyridin und 4-Dimethylaminopyridin. Die Angabe "in Abwesenheit eines Katalysators" ist so aufzufassen, dass Verbindungen mit katalytischer Wirkung auf die Acetylierungsreaktion nicht in wirksamen Menge zu dem in der Reaktion eingesetzten Essigsäureanhydrid und dem lignocellulosehaligen Fasermaterial zugesetzt werden sollen. Sehr geringe Mengen an Katalysatoren, wie insbesondere weniger als 100 ppm, vorzugweise weniger als 10 ppm und weiter bevorzugt weniger als 5 ppm können dabei toleriert werden, meist bevorzugt ist es dennoch, wenn kein Katalysator in die Reaktion einbezogen wird.

Als lignozellulosehaltige Fasermaterialien eignen sich insbesondere Naturfasern, beispielsweise Hanffasern, Flachsfasern, Jutefasern, Rapsfasern, Miscanthusfasern und Palmfasern. Holzfasern sind als Fasermaterial wegen ihrer in der Regel geringeren Faserlänge im Kontext der vorliegenden Erfindung weniger geeignet, so dass in einer bevorzugten Ausführungsform das lignocellulosehaltige Fasermaterial nicht Holz oder ein davon abgeleitetes Fasermaterial ist.

Die lignozellulosehaltigen Fasermaterialien können vor der Acetylierungsreaktion in i) getrocknet werden, z.B. auf einen Restfeuchtegehalt von < 1%. Das Trocknen kann in diesem Fall bei erhöhter Temperatur, wie 60°C oder mehr und insbesondere 80°C oder mehr, jedoch unterhalb einer Temperatur bei der sich das Fasermaterial auf Grund von Zersetzung verfärbt, erfolgen. Als besonders geeignet kann eine Temperatur im Bereich von 80°C bis 95°C angegeben werden. Zur Unterstützung der Trocknung kann diese bei reduziertem Druck (d.h. z.B. weniger als 800 mbar) durchgeführt werden. Als besonders geeignet ist ein Druck im Bereich von etwa 50 bis 100 mbar zu nennen. In der Regel liefert ein Trocknen für einen Zeitraum von 4 bis 12 h eine ausreichend geringe Restfeuchte, und ist damit im Rahmen der Erfindung bevorzugt.

Ein Trocknen des lignozellulosehaltigen Fasermaterials ist jedoch nicht zwangsläufig erforderlich, da im Material noch vorhandene Restfeuchte auch durch Umwandlung mit überschüssigem Essigsäureanhydrid zu Essigsäure umgesetzt werden kann. In diesem Fall erfolgt das Trocknen *in situ* mit der Umsetzung des lignozellulosehaltigen Fasermaterials mit dem Essigsäureanhydrid. Abhängig vom Feuchtegehalt muss in diesem Fall eine geringfügig größere Menge an Essigsäureanhydrid in die Reaktion einbezogen werden. Wird ein nicht getrocknetes lignozellulosehaltiges Fasermaterial in der Reaktion verwendet, so liegt dessen Restfeuchtegehalt in der Regel im Bereich von etwa 6 bis etwa 12,5 %.

Der Kernpunkt des Verfahrens ist die Acetylierung des Fasermaterials mit Essigsäureanhydrid unter besonders milden Bedingungen. Vorzugsweise erfolgt die Behandlung des lignozellulosehaltigen Fasermaterials mit Essigsäureanhydrid in Schritt i) so, dass die Behandlung bei einer Temperatur von etwa 90 bis 140 °C, einem Druck von etwa ±150 mbar unter/über Normaldruck für eine Zeitdauer von etwa 1 bis 8 Stunden erfolgt. Bei diesen Bedingungen liegt das Essigsäureanhydrid in der Regel in flüssigem Aggregatzustand vor, während das lignozellulosehaltige Fasermaterial fest ist. Alternativ kann das Essigsäureanhydrid bei entsprechenden Bedingungen aber auch als Dampf (d.h. gasförmig) eingesetzt werden. Weiterhin vorzugsweise wird das Verfahren so durchgeführt, dass das Gewichtsverhältnis von Essigsäureanhydrid zu lignozellulosehaltigem Fasermaterial etwa 50:1 bis 1:1, berechnet anhand der Masse des lignozellulosehaltigen Fasermaterials beträgt. Besonders bevorzugt beträgt das Verhältnis etwa 35:1 bis 5:1 und weiter bevorzugt etwa 25:1 bis 8:1. Abhängig von den Reaktionsbedingungen kann auch eine geringere Menge an Essigsäureanhydrid ausreichend sein, wie ein Verhältnis im Bereich von etwa 1:1 bis etwa 8:1 und bevorzugt etwa 2,5:1 bis 5:1.

Es hat sich gezeigt, dass eine partielle Acetylierung ausreichend ist, um den Fasern günstige hydrophobe Eigenschaften zu vermitteln. Im Rahmen der vorliegenden Erfindung werden die Reaktionsbedingungen daher vorzugsweise so gewählt, dass das erhaltene Produkt eine Acetylzahl im Bereich von etwa 22 bis 45 %, weiter bevorzugt im Bereich von 24 bis 38% und noch weiter bevorzugt im Bereich von 28 bis 35% aufweist. Die Acetylzahl lässt sich dabei z.B. durch die Reaktionszeit, die eingesetzte Menge an Essigsäureanhydrid oder die Reaktionstemperatur beeinflussen. Zusätzlich oder alternativ dazu können die Reaktionsbedingungen so eingestellt werden, dass ein Substitutionsgrad DS im Bereich von 0,7 bis 1,5, vorzugsweise 0,8 bis 1,35 und weiter bevorzugt 0,9 bis 1,25 und noch weiter bevorzugt 0,95 bis 1,22 erhalten wird. In Bezug auf die angegebenen Obergrenzen der Acetylzahl und des Substitutionsgrades hat es sich gezeigt, dass sich die Wasseraufnahme bei noch höherer Acetylierung nicht mehr in nennenswertem Umfang verändert. Eine höhere Acetylierung ist mit den Nachteilen von höherem Materialeinsatz (Essigsäureanhydrid) und/oder längeren Reaktionszeiten verbunden. Bei einem Unterschreiten der genannten Untergrenzen wird hingegen das Ziel von verbesserten Hydrophobizitätseigenschaften nicht mehr im gewünschten Umfang erreicht.

Im Schritt iii) des vorstehend geschilderten Verfahrens erfolgt die destillative Abtrennung der Essigsäure. Hierzu wird der Verfahrensschritt iii) vorzugsweise so ausgeführt, dass die destillative Abtrennung der Essigsäure unter reduziertem Druck (< 800 mbar), und insbesondere bei etwa 50 bis 60 mbar erfolgt.

Der Schritt iii) kann entweder zeitgleich mit der Behandlung des lignocellulosehaltigen Fasermaterials mit Essigsäureanhydrid in Schritt (i), oder zeitlich getrennt davon, z.B. nach der Abtrennung des acetylierten Fasermaterials von dem überschüssigen Essigsäureanhydrid, erfolgen. Für eine mit der Umsetzung in Schritt (i) zeitgleiche destillative Trennung nutzt man den Umstand, dass Essigsäueranhydrid bei Normaldruck einen Siedepunkt von etwa 140°C aufweist, während Essigsäure schon bei etwa 120 °C siedet. Andererseits sind Essigsäure und Essigsäureanhydrid bei Umgebungstemperatur flüssig, und können so leicht von dem festen Fasermaterial abgetrennt werden. Es kann daher auch zweckmäßig sein, das feste Fasermaterial zunächst durch Filtrieren von dem festen Fasermaterial zu trennen und die flüssigen Bestandteile des Filtrats anschließend destillativ zu trennen.

Im Schritt ii) erfolgt die Abtrennung des acetylierten lignozellulosehaltigen Fasermaterials von dem überschüssigen Essigsäureanhydrid. Da das lignozellulosehaltige Fasermaterial im Gegensatz zum überschüssigen Essigsäureanhydrid fest ist, erfolgt die Abtrennung zweckmäßig über eine Filtration. Das so erhaltene Filtrat kann anschließend weiter aufgereinigt werden, bevorzugt zunächst durch Entfernen von an den Fasern noch anhaftenden Resten von Essigsäureanhydrid und/oder Essigsäure unter reduziertem Druck. Als geeigneter Druck für diese Behandlung kann ein Druck im Bereich von etwa 20 bis 80 mbar und bevorzugt 50 bis 60 mbar angegeben werden. Zur Verbesserung der Effektivität der Behandlung unter reduziertem Druck, erfolgt diese zweckmäßig bei erhöhter Temperatur (gegenüber 25°C), bevorzugt bei mindestens 40°C und besonders bevorzugt im Bereich von 50 bis 70°C. Auf diese Weise abgetrenntes Essigsäureanhydrid und Essigsäure kann mit dem in Schritt ii) des Verfahrens abgetrennten Essigsäureanhydrid vereinigt und dem Schritt iii) des Verfahrens zugeführt werden.

Um ein ausreichend reines acetyliertes lignozellulosehaltiges Fasermaterial zu erhalten, ist bei einer ausschließlichen Behandlung unter reduziertem Druck allerdings eine vergleichsweise lange Behandlungszeit erforderlich. Daher ist es zweckmäßig, Restspuren von Essigsäure und Essigsäureanhydrid durch einen Extraktionsschritt zu entfernen. Dies kann z.B. durch Waschen der Fasern mit Wasser erfolgen, wobei warmes (d.h. mit einer Temperatur von > 25°C) oder kaltes (d.h. mit einer Temperatur von < 25°C) Wasser verwendet werden kann. Bevorzugt ist ein Waschen zunächst mit kalten und darauffolgend mit warmen Wasser.

Ein intensives Waschen, bei dem große Mengen an Waschlösung anfallen ist in der Regel nicht erforderlich, weil keine Katalysatorreste an den Fasern anhaften, so dass diesbezüglich kein Reinigungsproblem vorliegt.

Alternativ können Restspuren von Essigsäure und Essigsäureanhydrid auch durch Extraktion (z.B. Soxhletieren) mit einem unpolaren Lösungsmittel entfernt werden, in dem sich die acetylierten Lignocellulosefasern nicht lösen. Als Beispiel für ein solches Lösungsmittel sind Etherlösungsmittel, und insbesondere Diethylether und methyl-tert-Butylether zu nennen.

In einer besonders bevorzugten Ausführungsform der vorliegenden Erfindung umfasst der Schritt ii) ein Trennen des in Schritt i) acetylierten lignozellulosehaltigen Fasermaterials von dem überschüssigen Essigsäureanhydrid und gegebenenfalls vorhandener Essigsäure durch Filtrieren, das erhaltene abfiltrierte acetylierte lignozellulosehaltige Fasermaterial wird anschließend unter reduziertem Druck, insbesondere bei einem Druck von etwa 50 bis 60 mbar behandelt und mit Wasser gewaschen, um noch anhaftende Reste von Essigsäure und Essigsäureanhydrid zu entfernen.

Durch diese Abfolge von Schritten wird ein acetyliertes Fasermaterial erhalten, das im Wesentlichen frei von Essigsäureanhydrid und/oder Essigsäure ist und damit vollkommen geruchsneutral ist. Mit "im Wesentlichen frei" ist hier gemeint, dass das acetyliertes Fasermaterial einen Restgehalt von weniger als 50 ppm, vorzugsweise weniger als 10 ppm und besonders bevorzugt weniger als 1 ppm an Essigsäure und/oder Essigsäureanhydrid enthält.

Die vorliegende Erfindung betrifft auch ein acetyliertes lignozellulosehaltiges Fasermaterial, das nach dem oben beschriebenen Verfahren hergestellt ist. Dieses Fasermaterial zeichnet sich durch eine stark hydrophobierte Oberfläche aus, was zu einer verbesserten Kompatibilität mit vielen Oberflächenbehandlungen wie beispielsweise Lackierungen und Verklebungen führt. Gleichzeitig macht die deutlich geringere Wasseraufnahme des Fasermaterials die Materialien bei Einsatz als Bestandteil von Verbundmaterialien, Konstruktionsmaterialien oder Isolationsmaterialien wesentlich weniger anfällig gegen Rissbildung und Verformung. Schließlich wirkt die Hydrophobierung des Fasermaterials auch mikrobiologischem Abbau entgegen, und ermöglicht gleichzeitig eine Verminderung oder einen Verzicht auf den Einsatz von bioziden oder fungiziden Substanzen. Gleichzeitig weisen die erfindungsgemäß hergestellten acetylierten lignozellulosehaltigen Fasermaterialien keine Verfärbungen auf und aufgrund der milden Reaktionsbedingungen beim Herstellungsverfahren treten auch keine geruchsbelästigenden und/oder toxikologisch bedenklichen Nebenprodukte wie beispielsweise Furfurylaldehyd auf. Aufgrund des Verzichts auf einen Katalysator bei der Herstellung der erfindungsgemäßen Materialien treten auch keine Probleme mit der Langzeitstabilität durch noch anhaftende Katalysatorreste auf.

Das erfindungsgemäß hergestellte acetylierte lignozellulosehaltige Fasermaterial, weist entsprechend dem Vorstehenden vorzugsweise eine Acetylzahl im Bereich von etwa 22 bis 45 %, weiter bevorzugt im Bereich von 24 bis 38% und noch weiter bevorzugt im Bereich von 28 bis 34% auf. Zusätzlich oder alternativ dazu weist das erfindungsgemäß hergestellte acetylierte lignozellulosehaltige Fasermaterial einen Substitutionsgrad DS im Bereich von 0,3 bis 1,5, vorzugsweise 0,35 bis 1,35 und weiter bevorzugt 0,4 bis 1,25 und noch weiter bevorzugt 0,45 bis 1,22 auf.

Die vorstehend genannten Vorteile machen die erfindungsgemäß hergestellten acetylierten lignozellulosehaltigen Fasermaterialien besonders geeignet für die Verwendung als Bestandteil von Verbundmaterialien, insbesondere in Form von Compounds die im sichtbaren und nicht sichtbaren Bereich im Fahrzeugbau, wie z.B. als Türverkleidungen, Sitzschalen und Hutablagen, im Gartenbau, Möbelbau und bei Haushaltswaren eingesetzt werden.

Ebenso geeignet sind die erfindungsgemäß hergestellten acetylierten lignozellulosehaltigen Fasermaterialien als Bestandteil von Konstruktions- oder Isolationsmaterialien, insbesondere in Form von Stopf-und Einblasdämmungen und Dämmmatten und Vliese. Eine weitere geeignete Anwendung für die acetylierten lignozellulosehaltigen Fasermaterialien stellt die Absorption von Öl dar.

Die Vorteile des erfindungsgemäßen Verfahrens und der danach hergestellten acetylierten lignozellulosehaltigen Fasermaterialien werden durch die folgenden Beispiele noch näher illustriert:

### Beispiel 1: Acetylierung von Hanfstreu ohne Abdestillieren der Essigsäure, aber mit anschließender Aufreinigung des Essigsäureanhydrids

85g Hanfstreu (Feuchte 10,5%) werden in einem 1000 ml Rundkolben vorgelegt. Anschließend werden 350g Essigsäureanhydrid (91 %) dazugegeben und das Gemisch wird mit einem Ölbad unter Rückfluss erhitzt. Nach 2h unter Rückfluss wird das Gemisch abgekühlt und das Streu wird über ein grobes Sieb abfiltriert. Vom Essigsäureanhydrid-Filtrat wird die entstandene Essigsäure destillativ (60mbar, 80°C) abgetrennt und anschließend wird das Essigsäureanhydrid destillativ aufgereinigt, um es für eine weitere Acetylierung einsetzen zu können. Das Hanfstreu wird im Vakuum bis zur Trockne vom Filtrat befreit und anschließend mit Wasser pH neutral gewaschen. Danach wird das Hanfstreu im Ofen bei 60°C zwei Tage getrocknet. Das so erzeugte acetylierte Hanfstreu wurde in einer Ausbeute von 83,9 g (Restfeuchte <1%) erhalten. Das acetylierte Hanfstreu zeigt eine Onset Temperatur in der TGA Messung von 327,6 °C. Es hatte eine Acetylzahl von 27,5% (DS: 0,91). Es ist keinerlei Verfärbung des Produktes zu erkennen. Die Farbzahl des rückgewonnenen Essigsäureanhydrids betrug 12, die Farbzahl der rückgewonnenen Essigsäure betrug 19.

Feuchteaufnahme: Die Feuchteaufnahme wurde mit dem Infrarot-Feuchtemessgerät MA 37-1 von Sartorius bestimmt.

Die thermische Stabilität wurde mit einer Thermogravimetrie (TGA) von der Firma Netzsch (TG209F1 Libra, 20K/min) bestimmt.

Das acetylierte Hanfstreu nahm innerhalb von 24h eine Feuchte von 2,2% an. Unter den gleichen Bedingungen nahm ein nicht wie vorher getrocknetes und acetyliertes Hanfstreu etwa 7% Feuchte an.

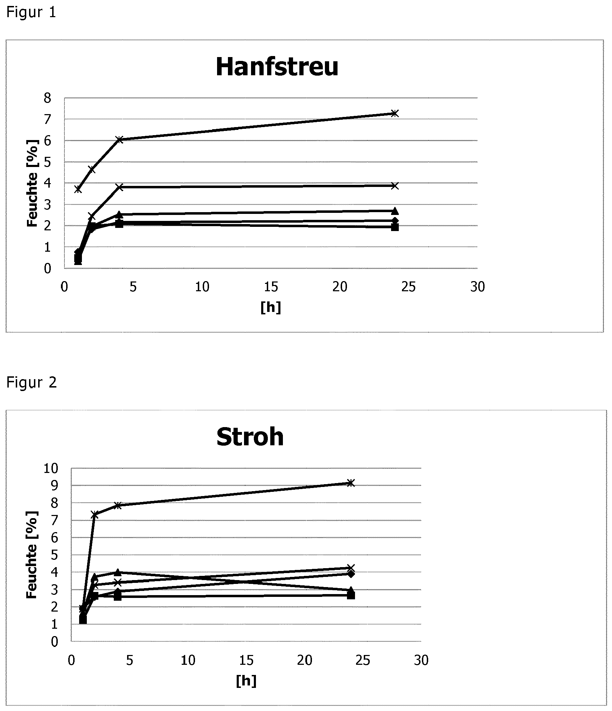

Ein weiteres acetyliertes Hanfstreuprodukt wurde analog der vorstehenden Beschreibung hergestellt, wobei die Reaktionszeit bei 8 h lag. Weitere acetylierte Hanfstreuprodukte wurden mit Reaktionszeiten von 1, 4 und 8 h hergestellt, wobei das Ausgangsmaterial vor der Reaktion jeweils auf eine Restfeuchte von <1 % getrocknet wurde. Die Eigenschaften der so hergestellten acetylierten Hanfstreuprodukte sind in der folgenden Tabelle 1 wiedergegeben. Die Ergebnisse der Untersuchungen zur Feuchtigkeitsaufnahme sind in Figur 1 dargestellt. X in Figur 1 bezeichnet das nicht acetylierte Hanfstreu.

**Tabelle 1:**

| Hanfstreu vorgetrocknet | Acetylierungsdauer [h] | Acetylzahl [%] | DS | Markierung |
|---|---|---|---|---|
| nein | 8 | 30,75 | 1,06 | ◆ |
| ja | 8 | 31,09 | 1,07 | ■ |
| ja | 4 | 29,97 | 1,02 | ▲ |
| ja | 1 | 26,12 | 0,86 | x |

### Beispiel 2: Acetylierung von Stroh

10g Stroh (Feuchte 12,21%) werden in einem 1000 ml Rundkolben vorgelegt. Anschließend werden 332g Essigsäureanhydrid (91 %) dazugegeben und das Gemisch wird mit einem Ölbad unter Rückfluss erhitzt. Nach 8h unter Rückfluss wird das Gemisch abgekühlt und das Stroh über ein grobes Sieb abfiltriert. Das Stroh wird im Vakuum bis zur Trockneq vom Filtrat befreit und anschließend mit Wasser pH neutral gewaschen. Danach wird das Stroh im Ofen bei 95°C über Nacht getrocknet. Das so erzeugte acetylierte Stroh wurde in einer Ausbeute von 9,93 g (Restfeuchte <1%) erhalten. Es hatte eine Acetylzahl von 33,05% (DS: 1,16). Das acetylierte Stroh zeigt eine Onset Temperatur in der TGA Messung von 334,4 °C.

Es wurden verschiedene Proben von acetyliertem Stroh mit unterschiedlicher Acetylierungsdauer/Acetylierungsgrad hergestellt (sh. Tabelle 2). Die Proben nahmen nach 24h eine Feuchtigkeit von 2,5-4% an (siehe Figur 2). 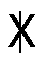 in Figur 2 bezeichnet das nicht acetylierte Stroh.

### Acetylzahl je nach Acetylierungsdauer:

| Stroh vorgetrocknet | Acetylierungsdauer [h] | Acetylzahl [%] | DS | Markierung |
|---|---|---|---|---|
| nein | 8 | 33,05 | 1,16 | ◆ |
| ja | 8 | 34,06 | 1,21 | ■ |
| ja | 4 | 32,34 | 1,13 | ▲ |
| ja | 1 | 27,81 | 0,93 | x |

### Beispiel 3: Acetylierung von Hanfdämmstoffen

30 g Hanfdämmstoff der Firma Thermo Natur (Feuchte 10,2%) werden in einem 250 ml Rundkolben vorgelegt. Anschließend werden 1500g Essigsäureanhydrid (91 %) dazugegeben und das Gemisch wird mit einem Ölbad unter Rückfluss erhitzt. Nach 8h unter Rückfluss wird das Gemisch über Nacht abgekühlt und danach über ein grobes Sieb abfiltriert. Der Hanfdämmstoff wird im Vakuum bis zur Trockne vom Filtrat befreit und anschließend mit Wasser pH neutral gewaschen. Danach wird der Hanfdämmstoff im Ofen bei 60°C über Nacht getrocknet. Das so erzeugte acetylierte Dämmstoff wurde in einer Ausbeute von 31,7 g (Restfeuchte <1%) erhalten. Es hatte eine Acetylzahl von 20,6% (DS: 0,65). Der acetylierte Dämmstoff zeigt eine Onset Temperatur in der TGA Messung von 316,2 °C.

## Patentansprüche

1. Verfahren zur Acetylierung von lignozellulosehaltigen Fasermaterialien, umfassend die Schritte:
i) Behandeln des lignozellulosehaltigen Fasermaterials mit Essigsäureanhydrid in Abwesenheit eines Katalysators unter einem Druck von nicht mehr als 0,5 bar über Normaldruck (101325 Pa), und einer Temperatur von ≤ 200°C;
ii) Abtrennen des acetylierten lignozellulosehaltigen Fasermaterials von dem überschüssigen Essigsäureanhydrid, und
iii) destillatives Abtrennen der bei der Acetylierung generierten Essigsäure.

2. Verfahren gemäß Anspruch 1,
**dadurch gekennzeichnet, dass**
das lignozellulosehaltige Fasermaterial eine Naturfaser ist, insbesondere ausgewählt aus Hanffasern, Flachsfasern, Jutefasern, Rapsfasern, Miscanthusfasern und Palmfasern.

3. Verfahren gemäß Anspruch 1 oder 2,
**dadurch gekennzeichnet, dass**
das lignozellulosehaltige Fasermaterials vor der Behandlung in Schritt i) vorgetrocknet wird, bevorzugt durch Anlegen von Vakuum und/oder Erhitzen.

4. Verfahren gemäß mindestens einem der vorherigen Ansprüche,
**dadurch gekennzeichnet, dass**
das Vortrocknen des lignozellulosehaltigen Fasermaterials bei einer Temperatur von etwa 80 bis 95°C, einem Druck von etwa 50 bis 100 mbar für eine Zeitdauer von etwa 4 bis 12 Stunden erfolgt.

5. Verfahren gemäß mindestens einem der vorherigen Ansprüche,
**dadurch gekennzeichnet, dass**
die Behandlung des lignozellulosehaltigen Fasermaterials mit Essigsäureanhydrid in Schritt i) bei einer Temperatur von etwa 90 bis 140°C, einem Druck von etwa ± 150 mbar unter/über Normaldruck für eine Zeitdauer von etwa 1 bis 8 Stunden erfolgt, wobei das Gewichtsverhältnis von Essigsäureanhydrid zu lignozellulosehaltigem Fasermaterial etwa 35:1 bis 5:1, berechnet anhand der Masse des lignocellulosehaltigen Fasermaterials beträgt.

6. Verfahren nach mindestens einem der Ansprüche 1 bis 5,
**dadurch gekennzeichnet, dass**
die Behandlung des lignozellulosehaltigen Fasermaterials mit Essigsäureanhydrid so durchgeführt wird, dass das Essigsäureanhydrid gasförmig eingesetzt wird.

7. Verfahren gemäß mindestens einem der vorherigen Ansprüche,
**dadurch gekennzeichnet, dass**
die destillative Abtrennung der entstehenden Essigsäure in Schritt ii) unter Vakuum, insbesondere bei etwa 50 bis 60 mbar erfolgt.

8. Verfahren gemäß mindestens einem der vorherigen Ansprüche,
**dadurch gekennzeichnet, dass**
das Verfahren die weiteren Schritte umfasst:
iv) Entfernen noch anhaftender Reste von Essigsäureanhydrid und Essigsäure durch Behandeln des abfiltrierten acetylierten lignocellulosehaltigen Fasermaterials unter reduziertem Druck, insbesondere bei einem Druck von etwa 50 bis 60 mbar; und
v) Waschen des aus Schritt iv) erhaltenen Fasermaterials mit Wasser.

9. Verfahren gemäß mindestens einem der vorherigen Ansprüche,
**dadurch gekennzeichnet, dass**
das destillative Abtrennen der Essigsäure in Schritt iii) zeitgleich mit dem Behandeln des lignozellulosehaltigen Fasermaterials mit Essigsäureanhydrid in Schritt i) erfolgt.

10. Verfahren gemäß mindestens einem der vorherigen Ansprüche,
**dadurch gekennzeichnet, dass**
das destillative Abtrennen der Essigsäure in Schritt iii) nach dem Abtrennen des acetylierten lignozellulosehaltigen Fasermaterials von dem überschüssigen Essigsäureanhydrid in Schritt ii) erfolgt.

11. Acetyliertes lignozellulosehaltiges Fasermaterial, hergestellt nach einem Verfahren gemäß mindestens einem der Ansprüche 1 bis 10.

12. Acetyliertes lignozellulosehaltiges Fasermaterial nach Anspruch 11,
**dadurch gekennzeichnet, dass**
es eine Acetylzahl im Bereich von 22 bis 45%, bevorzugt im Bereich von 24 bis 38% und weiter bevorzugt im Bereich von 28 bis 35% und/oder einen Substitutionsgrad DS im Bereich von 0,3 bis 1,5, bevorzugt im Bereich von 0,4 bis 1,25 und besonders bevorzugt im Bereich von 0,45 bis 1,22 aufweist.

13. Verwendung des acetylierten lignozellulosehaltigen Fasermaterials gemäß Anspruch 11 oder 12 als Bestandteil von Verbundmaterialien, insbesondere in Form von Compounds die im Gartenbau, Möbelbau und bei Haushaltswaren und im sichtbaren und nicht sichtbaren Bereich im Fahrzeugbau eingesetzt werden.

14. Verwendung des acetylierten lignozellulosehaltigen Fasermaterials gemäß Anspruch 11 oder 12 als Bestandteil von Konstruktions- oder Isolationsmaterialien, insbesondere in Form von Stopf-und Einblasdämmungen, Dämmmatten und Vliesen, oder als Absorptionsmittel für Öl.
